# EUROPEAN PATENT SPECIFICATION

(11) **EP 3 993 410 B1**
(45) Date of publication and mention of the grant of the patent: **27.11.2024**
(21) Application number: 20204284.2
(22) Date of filing: 28.10.2020
(51) Int. Cl.: H04N 7/18, G06F 3/01, G06T 15/20, G06T 19/00, H04N 13/111

(54) **A CAMERA SYSTEM AND METHOD FOR GENERATING AN EYE CONTACT IMAGE VIEW OF A PERSON**
KAMERASYSTEM UND VERFAHREN ZUR ERZEUGUNG EINER AUGENKONTAKTBILDANSICHT EINER PERSON
SYSTÈME DE CAMÉRA ET PROCÉDÉ DE GÉNÉRATION DE VUE D'IMAGE DE CONTACT D'UN IL D'UNE PERSONNE

(43) Date of publication of application: 04.05.2022
(73) Proprietor: Ningbo Geely Automobile Research & Development Co., Ltd., Ningbo, Zhejiang 315336 (CN); Zhejiang Geely Holding Group Co., Ltd., Hangzhou, Zhejiang 310051 (CN)
(72) Inventor: LINDBERG NILSSON, Erik, 417 47 GÖTEBORG (SE); NILSSON, Magnus, 448 37 FLODA (SE)
(74) Representative: Zacco Sweden AB

(56) References cited:
- WO-A1-2019/099397
- WO-A1-2019/243367
- US-A1- 2011 310 237
- US-A1- 2014 160 276
- US-A1- 2015 009 277
- US-A1- 2016 300 491
- US-A1- 2017 015 355
- US-A1- 2020 168 205
- US-A1- 2022 111 793
- US-B2- 8 477 175
- US-B2- 8 994 780

## Description

### Technical field

The present disclosure relates to a camera system for a video call.

### Background art

During a normal conversation, a first person normally looks into the eyes of a second person to get the attention and to connect to the second person.

In a video call, a first person looks into the eyes of a second person too, but the camera is not always where the first person is looking, so it often looks like the first person is looking away from the second persons eyes. For a better user experience it is desired to have the camera placed where the person is looking. This is however often very difficult, due to different reasons.

Placing a camera where a person is looking is especially hard in a vehicle where the vehicle occupant should keep the eyes on the road in front of the vehicle. The vehicle occupant may hence be gazing in a direction that through a windshield, and it is difficult to place a camera at the windshield. Further, the gaze direction through the windshield will change over time depending on e.g. the traffic situation around the vehicle, and it is therefore impossible to have a camera placed in all gaze directions. A vehicle occupant may also gaze around the vehicle through rear or side windows, or looking in mirrors, rear view camera displays, at other passengers etc.

A further example is when plural persons are in a conference room using one camera for a video conference all with a remote person. A person in the conference room may not always look into the camera but at the other persons in the conference room, or at different displays or e.g. white boards in the conference room, which may be more natural.

WO 2019/243367 A1 discloses a video conferencing system where participants might be identified using voice recognition from the audio data. US 8 994 780 B2 discloses a system comprising a 3-D perspective control module to implement a virtual camera that enables a first user of a computing system to maintain eye contact with one or more other users of a video conference. US 2015/009277 A1 discloses acquiring a depth map comprising the face of an interlocutor, and synthesizing the corrected view of the interlocutor's face by mapping the original image onto a 3D model of the interlocutor's face based on the depth map, and rendering the 3D model from a virtual camera placed along an estimate the interlocutor's line of sight.

### Summary

It is an object of the present disclosure to mitigate, alleviate or eliminate one or more of the above-identified deficiencies and disadvantages in the prior art and solve at least the above mentioned problem. The object of the present invention is defined by the appended set of claims.

### Brief descriptions of the drawings

The above objects, as well as additional objects, features and advantages of the present disclosure, will be more fully appreciated by reference to the following illustrative and non-limiting detailed description of example embodiments of the present disclosure, when taken in conjunction with the accompanying drawings.
Figure 1a illustrates an example camera system according to an embodiment of the present disclosure.
Figure 1b illustrates an example camera system according to an embodiment of the present disclosure.
Figures 2a-d illustrates example image data obtained by the camera according to some embodiments of the present disclosure.
Figure 3a-b illustrates a three dimensional model of the person according to an embodiment of the present disclosure.
Figure 4a illustrates example cameras configured to capture real-time two dimensional image data of the person according to some embodiments of the present disclosure.
Figure 4b illustrates image data of the person captured by a first and a second camera according to some embodiments of the present disclosure.
Figure 5a illustrates example cameras configured to capture real-time two dimensional image data of the person according to some embodiments of the present disclosure.
Figure 5b illustrates image data of the person captured by a first and a second camera according to some embodiments of the present disclosure.
Figure 6a illustrates an example gaze direction of the person according to some embodiments of the present disclosure.
Figure 6b illustrates an example synthetic camera view of the person according to some embodiments of the present disclosure.
Figure 7a illustrates an example gaze direction of the person according to some embodiments of the present disclosure.
Figure 7b illustrates an example synthetic camera view of the person according to some embodiments of the present disclosure.
Figure 8 illustrates an example synthetic camera view of the person according to some embodiments of the present disclosure.
Figure 9 illustrates an example camera system according to an embodiment of the present disclosure.
Figure 10 illustrates a flow chart of the method steps according to the second aspect of the disclosure.
Figure 11 illustrates a computer program product according to the third aspect of the disclosure.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments.

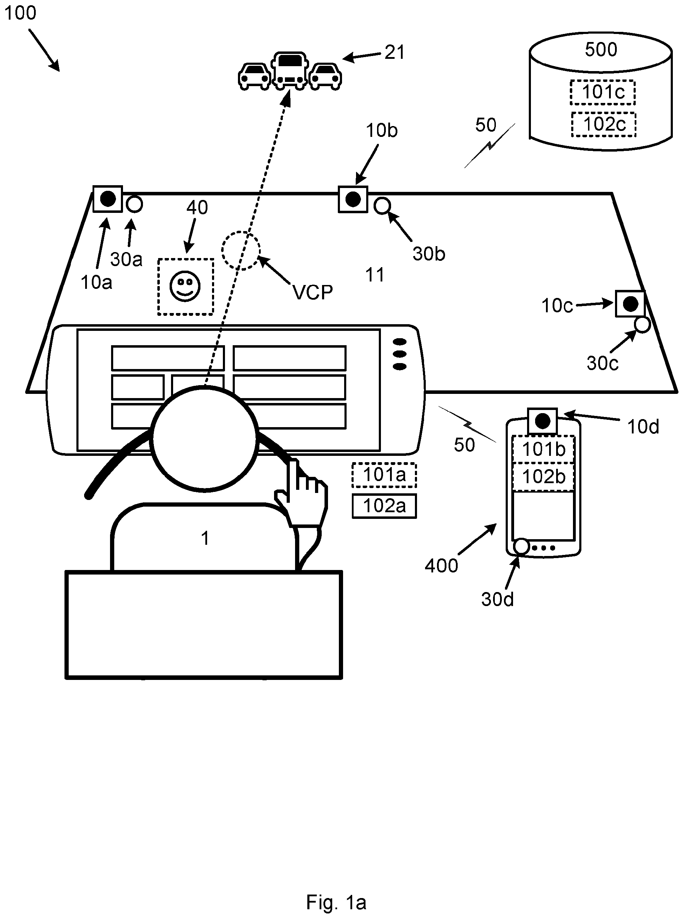

Figure 1a illustrates an example camera system according to an embodiment of the present disclosure.

The first aspect of this disclosure shows a camera system 100 for generating an eye contact image view of a person with a gaze direction that is offset from a camera position. The camera system 100 comprises a camera 10a,10b,10c,10d configured to obtain image data of the person.

According to some embodiments the person is a vehicle occupant 1 in a vehicle. This example embodiment is illustrated in Figure 1a. As mentioned in the background, placing a camera where a vehicle occupant is looking is especially hard since the vehicle occupant should keep the eyes on the road in front of the vehicle. The vehicle occupant 1 may hence be gazing in a direction that through a windshield 11, and it is difficult to place a camera at the windshield 11. Further, the gaze direction through the windshield 11 will change over time depending on e.g. the traffic situation around the vehicle, and it is therefore impossible to have a camera placed in all gaze directions. A vehicle occupant 1 may also gaze around the vehicle through rear or side windows, or looking in mirrors, rear view cameras displays, at other passengers etc. In the example as illustrated in Figure 1a the gaze direction of the vehicle occupant 1 is at the traffic 21 in front of the vehicle.

According to some embodiments the camera system 100 further comprises a display 40 configured to display an image view of the other party during a video call. According to some embodiments the display 40 is a head up display. In the example as illustrated in Figure 1a, the display 40 is a head up display, projected at the windshield 11 in front of the vehicle occupant 1.

According to some embodiments the camera 10a, 10b, 10c is a camera installed at a predetermined camera position. In the example as illustrated in Figure 1a the camera 10a, 10b, 10c is a camera installed at a predetermined camera position inside of the vehicle. In an example, existing cameras at different camera positions in a vehicle are used as cameras for the camera system 100.

According to some embodiments the camera is a camera 10d of a portable electronic device 400. In an example the portable electronic device 400 is any of a smartphone or a tablet that is operatively connectable to the camera system 100 via any of a wired communication network or a wireless communication network 50. In an example, the portable electronic device 400 is in a holder at the dash panel of the vehicle, with the camera 10d of the portable electronic device 400 faced towards the person that is the vehicle occupant 1.

According to some embodiments the camera position of the camera 10a, 10b, 10c, 10d is a predetermined camera positon in relation to the position of the person. According to some embodiments position information about plural camera positions of plural cameras 10a, 10b, 10c, 10d in relation to the position of the person is used when obtaining image data of the person by plural cameras 10a, 10b, 10c, 10d.

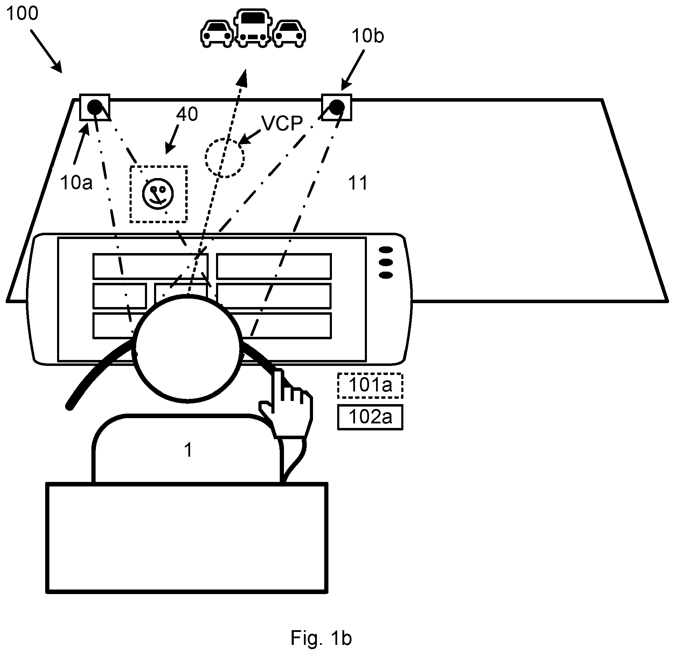

In the example as illustrated in Figure 1, example cameras 10a,10b,10c are placed at camera positions around the windshield 11, and one camera position defined by the position of the camera 10d of a portable electronic device 400. In the example as illustrated in Figure 1 the gaze direction of the vehicle occupant 11 is hence offset from any camera position.

The camera system 100 further comprises a processing circuitry 102a,102b,102c configured to be operatively connected to the camera 10a,10b,10c,10d.

According to some embodiments the processing circuitry 102a is the processing circuitry of an on-board vehicle computer. According to some embodiments the processing circuitry 102b, 102c is comprised in an electronic device 400, 500 connectable to the camera system 100 via a wireless communication network 50, as illustrated in Figure 1.

According to some embodiments the camera system 100 further comprises a memory 101a,101b,101c configured to store data. According to some embodiments the memory 101a is the memory of an on-board vehicle computer. According to some embodiments the memory 101b, 101c is comprised in an electronic device 400, 500 connectable to the camera system 100 via a wireless communication network 50, as illustrated in Figure 1.

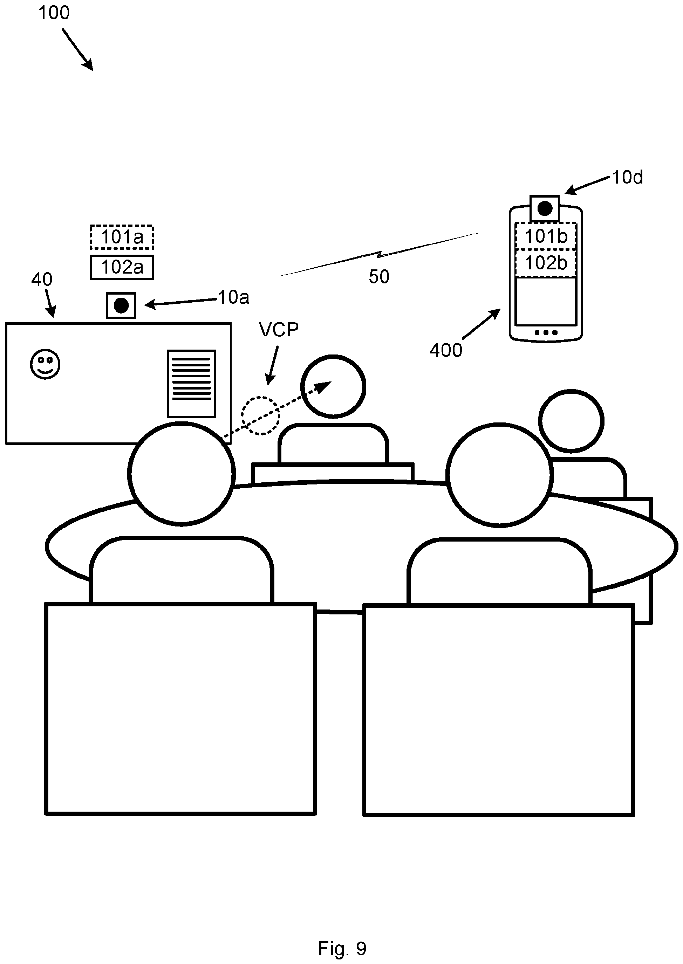

According to some embodiments the wireless communication network 50, as illustrated in Figure 1 and Figure 9, is a standardized wireless local area network such as a Wireless Local Area Network, WLAN, Bluetooth^{™}, ZigBee, Ultra-Wideband, Radio Frequency Identification, RFID, or similar network. In one example the wireless communication network 50 is a standardized wireless wide area network such as a Global System for Mobile Communications, GSM, Extended GSM, General Packet Radio Service, GPRS, Enhanced Data Rates for GSM Evolution, EDGE, Wideband Code Division Multiple Access, WCDMA, Long Term Evolution, LTE, Narrowband-loT, 5G, Worldwide Interoperability for Microwave Access, WiMAX or Ultra Mobile Broadband, UMB or similar network. According to some embodiments wireless communication network 50 can also be a combination of both a local area network and a wide area network. According to some embodiments the wireless communication network 50 is defined by common Internet Protocols.

The processing circuitry 102a,102b,102c is configured to obtain a camera view of the person from a camera position, and generate a synthetic camera view of the person from a virtual camera position. In the example as illustrated in Figure 1a, the virtual camera position is illustrated with a dotted circle "VCP" that is in the gaze direction of the vehicle occupant 1. In one example, the vehicle occupant is looking at the image view of the other party presented at the display 40, e.g. during a video call, and the gaze direction of the vehicle occupant 1 is hence at the display 40 which hence becomes the virtual camera position.

One advantage with this embodiment is that independent of the gaze direction of the person, the generated synthetic camera view of the person will imitate a gaze direction of the person as if the person looked right into a camera for an eye contact experience for the party looking at the generated synthetic camera view. One problem that is solved is hence that during a video call it does not look as if the person is looking away, but instead the other party will experience an eye contact with the person.

According to some embodiments the synthetic camera view of the person is an eye contact image view of the person. According to some embodiments the synthetic camera view of the person from a virtual camera position is used for generating video stream for a video call with the other party.

According to some embodiments a video stream from the other party is presented to the person at a display 40 front of the person. According to some embodiments a video stream from the other party is presented to a vehicle occupant 1 at a head up display 40, projected at a windshield 11 in front of the vehicle occupant 1.

According to some embodiments the processing circuitry 102a,102b,102c is further configured to generate a three dimensional model of the person by image data obtained by the camera 10a,10b,10c,10d.

According to some embodiments the processing circuitry 102a,102b,102c is further configured to generate the three dimensional model of the person by processing image data obtained by the camera 10a,10b,10c,10d using photogrammetry processing of the image data of the person obtained by the camera 10a,10b,10c,10d.

According to some embodiments the processing circuitry 102a,102b,102c is further configured to extract three dimensional measurements from two dimensional image data obtained by the camera 10a,10b,10c,10d for generating the three dimensional model of the person.

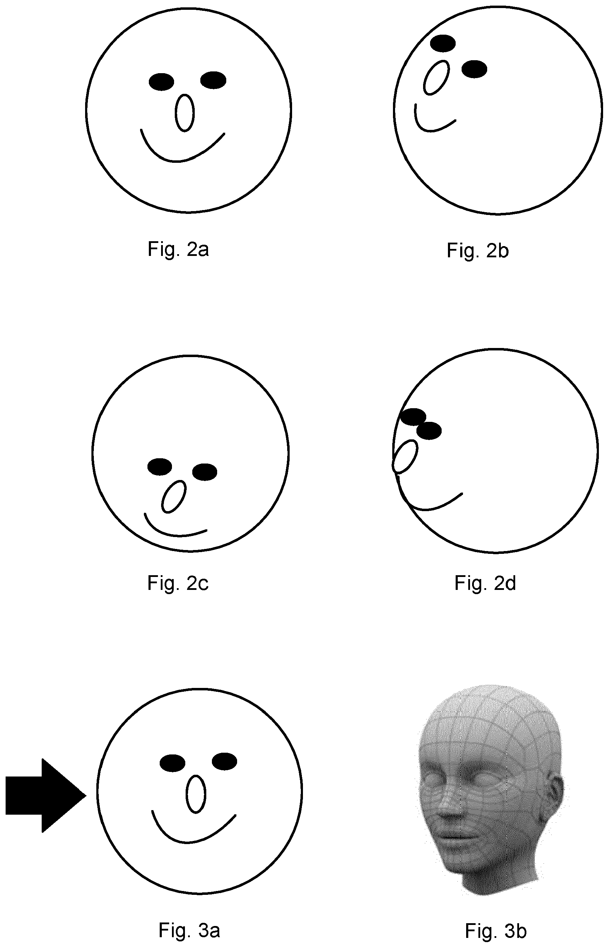

Figures 2a-d illustrates example image data obtained by the camera 10a,10b,10c,10d according to some embodiments of the present disclosure. In the example as illustrated in Figures 2a-d the person is moving the head in different directions as illustrated by each figure of Figures 2a-d, and plural image data is hence obtained of the person from plural directions.

According to some embodiments the three dimensional model of the person is stored in the memory 101a,101b,101c.

According to some embodiments multiple images from different cameras 10a, 10b, 10c, 10d at different camera positions are used to create the three dimensional model of the person. According to some embodiments the three dimensional model of the person is a three dimensional geometry of the human face of the person, as illustrated in Figure 3a and Figure 3b. According to some embodiments the processing circuitry 102a,102b,102c is further configured to use image recognition processing to generate a three dimensional model of the person.

In an example the person, e.g. a vehicle occupant 1, is prompted to move the head in different directions during a learning phase when starting the camera system 100 for generating the three dimensional model of the person. In an example the person, e.g. a vehicle occupant 1, is moving the head in different directions when using the camera system 100 while driving, and the camera system 100 automatically generates the three dimensional model of the person during a predetermined period of time or when a predetermined amount of image data is obtained.

According to some embodiments three dimensional model data is predetermined three dimensional model data of the person associated with face recognition data of the person and stored in the memory 101a,101b,101. According to some embodiments the processing circuitry 102a,102b,102c of the camera system 100 is further configured to obtain image data of the person, and compare face recognition data obtained from the image data of the person, with face recognition data of stored three dimensional model data stored in the memory 101a,101b,101c for applying an existing predetermined three dimensional model of the person.

According to some embodiments the three dimensional model of the person is determined by obtaining image data of moving parts of the face of the person. According to some embodiments the moving parts of the face of the person is any movement of at least any of a lip, eye, eyebrow, jaw, cheek, nose, ear, wrinkle or a dimple.

According to some embodiments the processing circuitry 102a,102b,102c is further configured to obtain real-time two dimensional image data of the person by the camera 10a,10b,10c,10d, and generate the synthetic camera view of the person from the virtual camera position by projecting the real-time two dimensional image data onto the three dimensional model based on the gaze direction of the person.

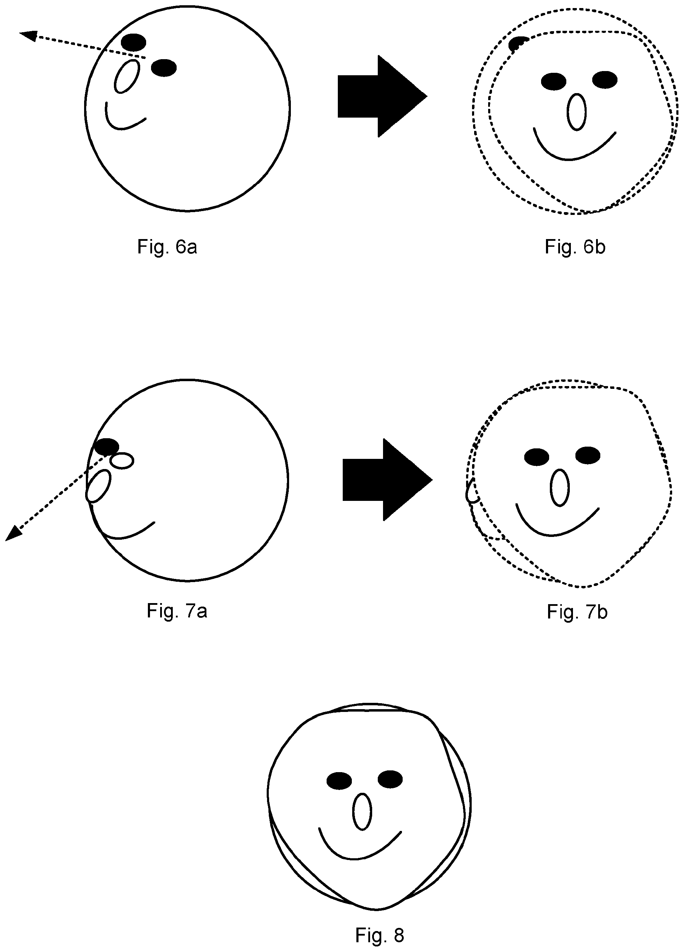

In the example as illustrated in Figure 1a, camera 10a obtains the real-time two dimensional image data of the person. In the example as illustrated in Figure 1a the person is a vehicle occupant 1 and the vehicle occupant 1 is driving the vehicle and the gaze direction of the vehicle occupant 1 is at the traffic 21 in front of the vehicle. In the example, real-time two dimensional image data, obtained by camera 10a of the vehicle occupant 1, is similar to the image as illustrated in Figure 6a. In the example, the vehicle occupant is hence gazing in a direction that is offset from the camera position of camera 10a. According to some embodiments the processing circuitry 102a,102b,102c is configured to project the real-time two dimensional image data onto the three dimensional model based on the gaze direction of the person. In the example the real-time two dimensional image data of the vehicle occupant is similar to the two dimensional image data as illustrated in Figure 6a, having a gaze direction that is offset from the camera position of camera 10a, and with knowledge of the three dimensional model of the person, the real-time two dimensional image data can be projected onto the three dimensional model based on the gaze direction of the person. The result is a synthetic camera view of the person from the virtual camera position, as the example synthetic camera view illustrated in Figure 6b. In the example as illustrated in Figure 1a, the virtual camera position is illustrated with a dotted circle "VCP".

For illustrative purpose, a further example of real-time two dimensional image data is illustrated in Figure 7a, having a gaze direction that is offset from the camera position of camera 10a, and with knowledge of the three dimensional model of the person, the real-time two dimensional image data can be projected onto the three dimensional model based on the gaze direction of the person. In this example, the result is a synthetic camera view of the person from the virtual camera position as the example synthetic camera view illustrated in Figure 7b. In other words, the synthetic camera view of the person from the virtual camera position is more or less the same independent of the gaze direction of the person in the real-time two dimensional image data. The result is hence an continuous eye contact experience is the party looking at the generated synthetic camera view.

For illustrative purpose, the example illustrations in Figures 6b and 7b illustrates an overlay of the synthetic camera view onto the real-time two dimensional image data as illustrated in Figures 6a and 6b. This is to visualize the effect of the generation of the synthetic camera view of the person from the virtual camera position when projecting the real-time two dimensional image data onto the three dimensional model based on the gaze direction of the person to obtain an continuous eye contact experience by the generated synthetic camera view, that is independent of the gaze direction of the person.

Figure 8 illustrates an example synthetic camera view of the person according to some embodiments of the present disclosure. In the example illustration of Figure 8, at least the moving part of the face of the person is processed when projecting the real-time two dimensional image data onto the three dimensional model. According to some embodiments the projection of the real-time two dimensional image data onto the three dimensional model is seamless using image processing to smoothen the boundaries between the real-time two dimensional image data and the three dimensional model when projecting the real-time two dimensional image data onto the three dimensional model.

One advantage with this embodiment is that independent of the gaze direction of the person, the generated synthetic camera view of the person will imitate a gaze direction of the person as if the person looked right into a camera for an eye contact experience for the party looking at the generated synthetic camera view, as illustrated in Figure 8.

One further advantage with this embodiment is that real-time two dimensional image data obtained by the camera, e.g. at least lips and eyes movement, based on the gaze direction of the person, e.g. in relation to the camera, is used when generating the synthetic camera view of the person.

According to some embodiments the processing circuitry 102a,102b,102c is further configured to determine a gaze direction for the three dimensional model of the person and determine a real-time gaze direction of the person. According to some embodiments the gaze direction is determined by at least any of the eyes, the nose, the ears or the mouth of the person.

According to some embodiments the gaze direction for the three dimensional model is predetermined and associated with the three dimensional model of the person. According to some embodiments the three dimensional model and the gaze direction for the three dimensional model is stored as three dimensional model data in the memory 101a,101b,101c.

According to some embodiments the real-time gaze direction of the person is determined based on the real-time two dimensional image data of the person obtained by the camera 10a, 10b, 10c, 10d. According to some embodiments the real-time gaze direction of the person is continuously determined and associated with the real-time two dimensional image data of the person.

One advantage with this embodiment is that the generation of the synthetic camera view of the person is using the real-time gaze direction of the person and correlates this direction with the gaze direction of the three dimensional model in order to project the real-time two dimensional image data onto the three dimensional model.

According to some embodiments the processing circuitry 102a,102b,102c is further configured to set the virtual camera position to be in the gaze direction of the person.

One advantage with this embodiment is that when generating the synthetic camera view of the person, the gaze direction gives a good eye contact experience for a party looking at the generated synthetic camera view.

According to some embodiments the processing circuitry 102a,102b,102c is further configured to set the virtual camera position to be in the gaze direction of the person during a first period of time and set the virtual camera position to be offset the gaze direction of the person during a second period of time.

One advantage with this embodiment is that when generating the synthetic camera view of the person, the gaze direction gives a good eye contact experience for the party looking at the generated synthetic camera view during a first period of time, followed by a gaze that is offset the eye contact, to give a natural less gaze intense experience for the party looking at the generated synthetic camera view.

According to some embodiments the gaze direction for the three dimensional model of the person and the real-time gaze direction of the person are used for generating the synthetic camera view of the person from the virtual camera position when projecting the real-time two dimensional image data onto the three dimensional model based on the gaze direction of the person.

According to some embodiments the processing circuitry 102a,102b,102c is further configured to align the gaze direction of the three dimensional model of the person with the real-time gaze direction of the person when projecting the real-time two dimensional image data onto the three dimensional model.

One advantage with this embodiment is that the generation of the synthetic camera view of the person is using the real-time gaze direction of the person and aligns this direction with the gaze direction of the three dimensional model in order to project the real-time two dimensional image data onto the three dimensional model.

According to some embodiments the processing circuitry 102a,102b,102c is further configured to continuously obtain image data by the camera 10a,10b,10c,10d to refine the three dimensional model of the person when the person is moving the head in different view angles of the camera 10a,10b,10c,10d.

One advantage with this embodiment is that the three dimensional model of the person gets refined and up to date.

According to some embodiments the camera system 100 further comprises at least a first camera 10a and at least a second camera 10b configured to capture the real-time two dimensional image data of the person to obtain images of the person from at least two different angles.

According to some embodiments the first camera 10a and the second camera 10b captures real-time two dimensional image data of the person at the same time, or within a predetermined period of time.

According to some embodiments image data is obtained by the first camera 10a and the second camera 10b at the same time, or within a predetermined period of time, and processed for generating the three dimensional model of the person by image data obtained by the camera 10a,10b,10c,10d.

According to some embodiments the processing circuitry 102a,102b,102c is further configured to obtain real-time two dimensional image data of the person at the same time, or within a predetermined period of time, by the first camera 10a and the second camera 10b, and generate the synthetic camera view of the person from the virtual camera position by projecting the real-time two dimensional image data onto the three dimensional model based on the gaze direction of the person.

One advantage with least a first camera 10a and at least a second camera 10b configured to capture the real-time two dimensional image data of the person to obtain images of the person from at least two different angles is that in the case the person is a vehicle occupant, the vehicle occupant may not always be facing in one direction, usually forward, but also around the vehicle, e.g. through rear or side windows, or looking in mirrors, rear view camera displays, at other passengers etc. Further cameras can hence cover plural angles, preferably 360 degrees around the vehicle occupant.

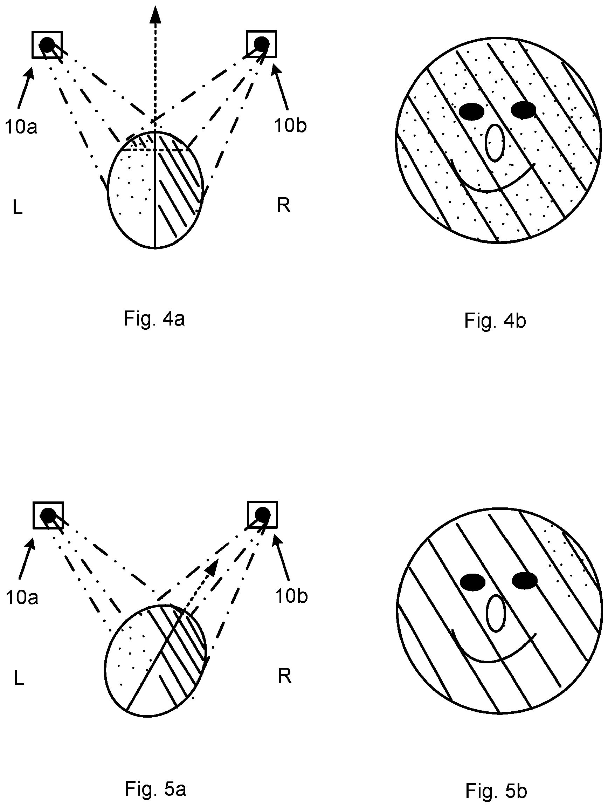

Figures 4a and 5b illustrate an example camera system 100 that comprises at least a first camera 10a and at least a second camera 10b. In the example illustration of Figure 4b the dots in the face illustrates image data obtained by the camera 10a. In the example illustration of Figure 4b the lines in the face illustrates image data obtained by the camera 10b. In the example illustration in 4a the gaze direction of the person is between the camera positions of camera 10a and camera 10b. In the example, image data of the person is obtained by both camera 10a and camera 10b as illustrated in Figure 4b.

In the example illustration of Figure 5b the dots in the face illustrates image data obtained by the camera 10a. In the example illustration of Figure 5b the lines in the face illustrates image data obtained by the camera 10b. In the example illustration in 5a the gaze direction of the person is to the right, and more to the camera positions of camera 10b, and less to the camera positions of camera 10a. In this example, image data of the person is obtained by both camera 10a and camera 10b as illustrated in Figure 5b, and the image data obtained by camera 10a is hence less than the image date obtained by camera 10b.

According to some embodiments plural cameras 10a,10b,10c,10d are used for continuously obtaining the image data. According to some embodiments plural image data is obtained of the person from plural directions by plural cameras 10a,10b,10c,10d and processed for generating at least any of the real-time two dimensional image data of the person and the three dimensional model of the person.

One advantage with this embodiment is that the likelihood that at least a part of the face of the person is always captured by one of the two cameras even if the person is e.g. looking in a left or right direction instead of in a forward facing direction.

Figure 1b illustrates an example camera system according to an embodiment of the present disclosure. In the example two cameras 10a and 10b are used for generating at least any of the real-time two dimensional image data of the person and the three dimensional model of the person.

According to some embodiments at least a first gaze direction of an real-time two dimensional image data of the person obtained by the first camera 10a, and at least a second gaze direction of an real-time two dimensional image data of the person obtained by the second camera 10b are processed for enhancing the generation of the synthetic camera view of the person from the virtual camera position when projecting the processed real-time two dimensional image data obtained by the first camera 10a and the second camera 10b onto the three dimensional model based on the gaze direction of the person. In the example illustration of Figure 1b a head up display 40 displays an image view of the other party during a video call.

According to some embodiments the synthetic camera view of the person from a virtual camera position is continuously determined. According to some embodiments the synthetic camera view of the person from a virtual camera position is continuously determined and generated based on the change of the gaze direction of the person. In the example illustration of Figure 1b the virtual camera position "VCP" as illustrated with a dotted circle, is continuously moving dependent on the gaze direction of the person. In the example of Figure 1b, the virtual camera position "VCP" is mainly somewhere at the windshield 11, but can also be located at a different location.

According to some embodiments the at least first camera 10a and the at least second camera 10b are configured capture real-time two dimensional image data of at least any of the eyes and the mouth of the person.

According to some embodiments plural cameras 10a,10b,10c,10d are used for capturing real-time two dimensional image data of at least any of the eyes and the mouth of the person.

According to some embodiments the processing circuitry 102a,102b,102c is further configured to generate the synthetic camera view of the person from the virtual camera position by projecting the real-time two dimensional image data of at least any of the eyes and the mouth of the person onto the three dimensional model based on the gaze direction of the person.

In an example two or more cameras 10a,10b,10c,10d are placed so that they together capture all parts of the face of the user that are moving and changing during normal conversation. In the example, lips and cheeks need to be covered but ears are possible to exclude.

One advantage with this embodiment is that in order to generate a useful synthetic camera view of the person, at least a moving part of the face of the person is needed when projecting the real-time two dimensional image data onto the three dimensional model

According to the claimed embodiment the camera system 100 further comprises a microphone 30a,30b,30c,30d and the processing circuitry 102a,102b,102c is further configured to determine a spoken word spoken by the person, and store image data of a facial expression of the person obtained by the camera 10a,10b,10c,10d associated with the spoken word to generate predetermined facial expression data.

According to some embodiments the processing circuitry 102a,102b,102c is further configured to determine an emotion of the person based on a facial expression of the person obtained by the camera 10a,10b,10c,10d and the sound of the spoken word obtained by the microphone 30a,30b,30c,30d, and store emotion data of the person associated the sound of the spoken word and the facial expression of the person to generate a predetermined facial expression data.

According to some embodiments the microphone 30a,30b,30c,30d is a microphone installed at a predetermined position. In the example as illustrated in Figure 1a the microphone 30a, 30b, 30c is a microphone installed at a predetermined position inside of a vehicle. In an example, existing microphones at different positions in a vehicle is used as microphones for the camera system 100. According to some embodiments the microphone is a microphone 30d of a portable electronic device 400. In an example the portable electronic device 400 is any of a smartphone or a tablet that is operatively connectable to the camera system 100 via a wireless communication network 50.

According to some embodiments the processing circuitry 102a,102b,102c is further configured to perform speech to text processing to associate the spoken word with a text and store image data of a facial expression of the person obtained by the camera 10a,10b,10c,10d associated with the spoken word and the text to generate predetermined facial expression data.

In an example the person, e.g. a vehicle occupant 1, is prompted to talk and say different words or letters during a learning phase when starting the camera system 100 for generating predetermined facial expression data. In an example the person, e.g. a vehicle occupant 1, is talking with a passenger in the vehicle, during a normal conversation, and plural words and letters associated with different facial expressions are learned by the camera system 100, and the camera system 100 automatically generates the generate predetermined facial expression data associates with the person during a predetermined period of time or when a predetermined amount of words or letter are obtained.

One advantage with this embodiment is that a facial expression associated with a certain spoken word can be learned and stored.

According to the claimed embodiment the camera system 100 further comprises a microphone 30a,30b,30c,30d and the processing circuitry 102a,102b,102c is further configured to determine a spoken word spoken by the person, and generate a synthetic facial expression of the person when generating the synthetic camera view of the person based on predetermined facial expression data associated with the spoken word.

One advantage with this embodiment is that a synthetic camera view of the person can be generated without a complete obtained camera view of the person, using the predetermined facial expression data associated with the determined spoken word.

According to some embodiments, in a determination that no image data of the person is obtained by any camera 10a,10b,10c,10d, but a spoken word by the person is determined, the processing circuitry 102a,102b,102c is further configured to generate a synthetic facial expression of the person, based on the spoken word and based on the predetermined facial expression data associated with the spoken word.

In an example, the person is looking in a direction where no camera 10a,10b,10c,10d can obtain any image data of the face of the person the synthetic camera view of the person can still simulate known facial expressions associated with the spoken word. In an example, a vehicle occupant may be reversing the vehicle, and turns around to face through the rear window, but the camera 10a,10b,10c,10d is arranged at a location in front of the vehicle occupant, the synthetic camera view of the person can still simulate known facial expressions associated with the spoken word.

In another example, it is difficult for the camera 10a,10b,10c,10d to obtain image data of the person due to e.g. strong light, or absence of light or that the camera is blended by light etc.

According to some embodiments the camera 10a,10b,10c,10d is configured to be turned off and in accordance with a determination that the camera 10a,10b,10c,10d is turned off, generating a synthetic facial expression of the person when generating the synthetic camera view of the person, based on predetermined facial expression data associated with the spoken word. In one example, a person may not want to be in a video call with current appearance, and instead use predetermined facial expression data associated with the spoken word.

Another example when it is difficult to place a camera where the person is looking is in an office environment when e.g. plural displays are used during a video call but only one camera is used for capturing the person. So when a first person is looking at a first display equipped with a video camera, the video call experience may be sufficient enough for the second person, but when the first person is looking at a second display, the second person may experience looking at the first persons cheek for example, and not into the eyes.

Figure 9 illustrates an example camera system 100 according to an embodiment of the present disclosure.

According to some embodiments the person is a video conference person 2 in a conference room. This example embodiment is illustrated in Figure 9.

As mentioned in the background, placing a camera where a video conference person 2 is looking may be difficult. A video conference person 2 in a conference room may not always look into the camera but at the other persons in the conference room, or at different displays, or at white boards, which may be more natural. Further, the gaze direction will change over time depending where the video conference person 2 is looking, at different people in the conference room for example, and it is therefore impossible to have a camera placed in all gaze directions. In one example as illustrated in Figure 9 the gaze direction of the video conference person 2 is at another person in the conference room.

According to some embodiments the camera system 100 further comprises a display 40 configured to display an image view of the other party during a video call. According to some embodiments the display 40 is a computer display. In the example as illustrated in Figure 9, the display 40 is large computer display on the wall in the conference room.

In one example the gaze direction of the video conference person 2 is at different objects presented at a display area of a display 40, e.g. a computer display. Even if the video conference person 2 is looking at the display 40, e.g. at the image view of the other party during a video call presented at a first part of the display area of the display 40, or at a presentation at a second part of the display area of the display 40, the video conference person 2 will not look straight into the camera 10a placed above the display 40, as illustrated in the Figure 9.

However, with the aspects and embodiments of the camera system 100 as previously described in this disclosure, one effect is that during a video call it does not look as if the video conference person 2 is looking away, e.g. at the other persons in the conference room, at different displays, or white boards, or at different parts of the display area of the display 40, but instead, the other party that will experience an eye contact with the video conference person 2.

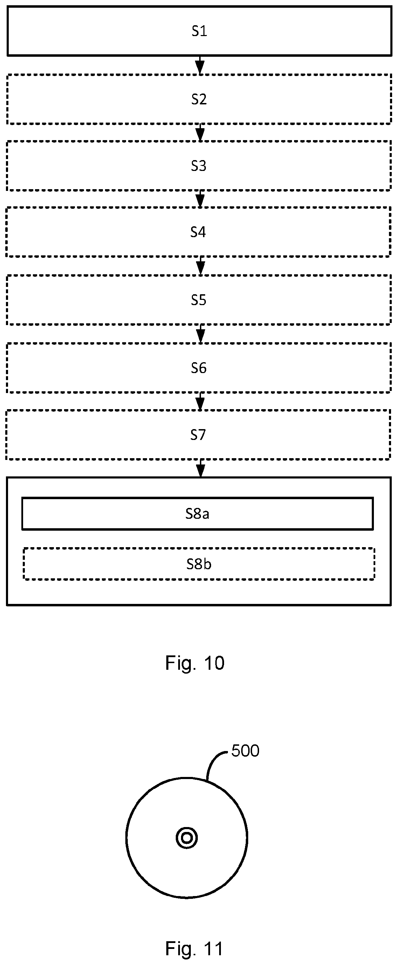

The second aspect of this disclosure shows a method for generating an eye contact image view of a person with a gaze direction that is offset from a camera position. Figure 10 illustrates a flow chart of the method steps according to the second aspect of the disclosure.

The method comprising the step of S1 obtaining a camera view of the person from a camera position, and the step of S8a generating a synthetic camera view of the person from a virtual camera position.

One advantage with this aspect is that independent of the gaze direction of the person, the generated synthetic camera view of the person will imitate a gaze direction of the person as if the person looked right into a camera for an eye contact experience for a party looking at the generated synthetic camera view.

According to some embodiments the method further comprises the step of S2 generating a three dimensional model of the person by image data obtained by the camera 10a,10b,10c,10d, the step of S4 obtaining real-time two dimensional image data of the person by the camera 10a,10b,10c,10d, and the step of S8b generating the synthetic camera view of the person from the virtual camera position by projecting the real-time two dimensional image data onto the three dimensional model based on the gaze direction of the person.

One advantage with this embodiment is that real-time two dimensional image data obtained by the camera, e.g. lips an eyes movement, based on the gaze direction of the person, e.g. in relation to the camera, is used when generating the synthetic camera view of the person.

According to some embodiments the method further comprises the step of S3 determining a gaze direction for the three dimensional model of the person, and the step of S5 determining a real-time gaze direction of the person.

One advantage with this embodiment is that the generation of the synthetic camera view of the person is using the real-time gaze direction of the person and correlates this direction with the gaze direction of the three dimensional model in order to project the real-time two dimensional image data onto the three dimensional model.

According to some embodiments the method further comprises the step of S6 setting the virtual camera position to be in the gaze direction of the person, and the step of S7 aligning the gaze direction of the three dimensional model of the person with the real-time gaze direction of the person when projecting the real-time two dimensional image data onto the three dimensional model.

One advantage with this embodiment is that the generation of the synthetic camera view of the person is using the real-time gaze direction of the person and aligns this direction with the gaze direction of the three dimensional model in order to project the real-time two dimensional image data onto the three dimensional model.

Figure 11 illustrates a computer program product according to the third aspect of the disclosure. The third aspect of this disclosure shows a processing circuitry program product the second aspect comprising a non-transitory processing circuitry readable medium, having thereon a processing circuitry program comprising program instructions, the processing circuitry program being loadable into a processing circuitry 102a,102b,102c and configured to cause execution of the method when the processing circuitry program is run by the at least one processing circuitry 102a,102b,102c.

The person skilled in the art realizes that the present disclosure is not limited to the preferred embodiments described above. The person skilled in the art further realizes that modifications and variations are possible within the scope of the appended claims.

## Claims

1. A camera system (100) for generating an eye contact image view of a person with a gaze direction that is offset from a camera position, the camera system (100) comprises:
a camera (10a,10b,10c,10d) configured to obtain image data of the person;
a microphone;
a processing circuitry (102a,102b,102c) configured to be operatively connected to the camera (10a,10b,10c,10d) and configured to:
- obtain a camera view of the person from a camera position;
- determine a spoken word spoken by the person;
- store image data of a facial expression of the person obtained by the camera (10a,10b,10c,10d) associated with the spoken word to generate predetermined facial expression data;
and further configured to
- upon determining that the spoken word has been spoken by the person;
- generate a synthetic camera view of the person from a virtual camera position; and
- generate a synthetic facial expression of the person when generating the synthetic camera view of the person based on the predetermined facial expression data associated with the spoken word.

2. The camera system (100) according to claim 1, wherein the processing circuitry (102a,102b,102c) is further configured to:
- generate a three dimensional model of the person by image data obtained by the camera (10a,10b,10c,10d);
- obtain real-time two dimensional image data of the person by the camera (10a,10b,10c,10d); and generate the synthetic camera view of the person from the virtual camera position by projecting the real-time two dimensional image data onto the three dimensional model based on the gaze direction of the person.

3. The camera system (100) according to any of the preceding claims, wherein the processing circuitry (102a,102b,102c) is further configured to:
- determine a gaze direction for the three dimensional model of the person; and
- determine a real-time gaze direction of the person.

4. The camera system (100) according to any of the preceding claims, wherein the processing circuitry (102a,102b,102c) is further configured to:
- set the virtual camera position to be in the gaze direction of the person.

5. The camera system (100) according to any of the preceding claims, wherein the processing circuitry (102a,102b,102c) is further configured to:
- align the gaze direction of the three dimensional model of the person with the real-time gaze direction of the person when projecting the real-time two dimensional image data onto the three dimensional model.

6. The camera system (100) according to any of the preceding claims, wherein the processing circuitry (102a,102b,102c) is further configured to continuously obtain image data by the camera (10a,10b,10c,10d) to refine the three dimensional model of the person when the person is moving the head in different view angles of the camera (10a,10b,10c,10d).

7. The camera system (100) according to any of the preceding claims, wherein the camera system (100) further comprises at least a first camera (10a) and at least a second camera (10b) configured to capture the real-time two dimensional image data of the person to obtain images of the person from at least two different angles.

8. The camera system (100) according to claim 7, wherein the at least first camera (10a) and the at least second camera (10b) are configured capture real-time two dimensional image data of at least any of the eyes and the mouth of the person.

9. A method for generating an eye contact image view of a person with a gaze direction that is offset from a camera position, the method comprising:
- (S1) obtaining a camera view of the person from a camera position;
- determining a spoken word spoken by the person;
- storing image data of a facial expression of the person obtained by the camera (10a,10b,10c,10d) associated with the spoken word to generate predetermined facial expression data;
the method further comprising
- upon further determining that the spoken word has been spoken by the person;
- (S8a) generating a synthetic camera view of the person from a virtual camera position; and
- generating a synthetic facial expression of the person when generating the synthetic camera view of the person based on the predetermined facial expression data associated with the spoken word.

10. The method according to claim 9 further comprising:
- (S2) generating a three dimensional model of the person by image data obtained by the camera (10a,10b,10c,10d);
- (S4) obtaining real-time two dimensional image data of the person by the camera (10a,10b,10c,10d); and
- (S8b) generating the synthetic camera view of the person from the virtual camera position by projecting the real-time two dimensional image data onto the three dimensional model based on the gaze direction of the person.

11. The method according to any of the claims 9-10 further comprising:
- (S3) determining a gaze direction for the three dimensional model of the person; and
- (S5) determining a real-time gaze direction of the person.

12. The method according to any of the claims 9-11 further comprising:
- (S6) setting the virtual camera position to be in the gaze direction of the person; and
- (S7) aligning the gaze direction of the three dimensional model of the person with the real-time gaze direction of the person when projecting the real-time two dimensional image data onto the three dimensional model.

13. A processing circuitry program product (500) comprising a non-transitory processing circuitry readable medium, having thereon a processing circuitry program comprising program instructions, the processing circuitry program being loadable into a processing circuitry (102a,102b,102c) and configured to cause execution of the method according to any of claims 9 through 12 when the processing circuitry program is run by the at least one processing circuitry (102a,102b,102c).

## Patentansprüche

1. Kamerasystem (100) zur Erzeugung einer Augenkontaktbildansicht einer Person mit einer Blickrichtung, die von einer Kameraposition versetzt ist, wobei das Kamerasystem (100) Folgendes umfasst:
eine Kamera (10a, 10b, 10c, 10d), die dazu konfiguriert ist, Bilddaten der Person zu erlangen;
ein Mikrofon;
eine Verarbeitungsschaltung (102a, 102b, 102c), die dazu konfiguriert ist, mit der Kamera (10a, 10b, 10c, 10d) wirkverbunden zu werden, und zu Folgendem konfiguriert ist:
- Erlangen einer Kameraansicht der Person aus einer Kameraposition;
- Bestimmen eines gesprochenen Worts, das durch die Person ausgesprochen wird;
- Speichern von Bilddaten eines Gesichtsausdrucks der Person, die durch die Kamera (10a, 10b, 10c, 10d) erlangt werden und dem gesprochenen Wort zugeordnet sind, um vorbestimmte Gesichtsausdruckdaten zu erzeugen;
und ferner zu Folgendem konfiguriert ist:
- bei Bestimmen, dass das gesprochene Wort durch die Person ausgesprochen wurde;
- Erzeugen einer künstlichen Kameraansicht der Person aus einer virtuellen Kameraposition; und
- Erzeugen eines künstlichen Gesichtsausdrucks der Person, wenn die künstliche Kameraansicht der Person erzeugt wird, basierend auf den vorbestimmten Gesichtsausdrucksdaten, die dem gesprochenen Wort zugeordnet sind.

2. Kamerasystem (100) nach Anspruch 1, wobei die Verarbeitungsschaltung (102a, 102b, 102c) ferner zu Folgendem konfiguriert ist:
- Erzeugen eines dreidimensionalen Modells der Person durch Bilddaten, die durch die Kamera (10a, 10b, 10c, 10d) erlangt werden;
- Erlangen von zweidimensionalen Echtzeitbilddaten der Person durch die Kamera (10a, 10b, 10c, 10d); und Erzeugen der künstlichen Kameraansicht der Person aus der virtuellen Kameraposition durch Projizieren der zweidimensionalen Echtzeitbilddaten auf das dreidimensionale Modell basierend auf der Blickrichtung der Person.

3. Kamerasystem (100) nach einem der vorhergehenden Ansprüche, wobei die Verarbeitungsschaltung (102a, 102b, 102c) ferner zu Folgendem konfiguriert ist:
- Bestimmen einer Blickrichtung für das dreidimensionale Modell der Person; und
- Bestimmen einer Echtzeitblickrichtung der Person.

4. Kamerasystem (100) nach einem der vorhergehenden Ansprüche, wobei die Verarbeitungsschaltung (102a, 102b, 102c) ferner zu Folgendem konfiguriert ist:
- Einstellen der virtuellen Kameraposition, sodass sie in der Blickrichtung der Person liegt.

5. Kamerasystem (100) nach einem der vorhergehenden Ansprüche, wobei die Verarbeitungsschaltung (102a, 102b, 102c) ferner zu Folgendem konfiguriert ist:
- Ausrichten der Blickrichtung des dreidimensionalen Modells der Person mit der Echtzeitblickrichtung der Person, wenn die zweidimensionalen Echtzeitbilddaten auf das dreidimensionale Modell projiziert werden.

6. Kamerasystem (100) nach einem der vorhergehenden Ansprüche, wobei die Verarbeitungsschaltung (102a, 102b, 102c) ferner dazu konfiguriert ist, kontinuierlich Bilddaten durch die Kamera (10a, 10b, 10c, 10d) zu erlangen, um das dreidimensionale Modell der Person zu verfeinern, wenn die Person den Kopf in unterschiedlichen Blickwinkeln der Kamera (10a, 10b, 10c, 10d) bewegt.

7. Kamerasystem (100) nach einem der vorhergehenden Ansprüche, wobei das Kamerasystem (100) ferner mindestens eine erste Kamera (10a) und mindestens eine zweite Kamera (10b) umfasst, die dazu konfiguriert sind, die zweidimensionalen Echtzeitbilddaten der Person aufzunehmen, um Bilder der Person aus mindestens zwei unterschiedlichen Winkeln zu erlangen.

8. Kamerasystem (100) nach Anspruch 7, wobei die mindestens erste Kamera (10a) und die mindestens zweite Kamera (10b) dazu konfiguriert sind, zweidimensionale Echtzeitbilddaten von mindestens einem der Augen und des Mundes der Person aufzunehmen.

9. Verfahren zur Erzeugung einer Augenkontaktbildansicht einer Person mit einer Blickrichtung, die von einer Kameraposition versetzt ist, wobei das Verfahren Folgendes umfasst:
- (S1) Erlangen einer Kameraansicht der Person aus einer Kameraposition;
- Bestimmen eines gesprochenen Worts, das durch die Person ausgesprochen wird;
- Speichern von Bilddaten eines Gesichtsausdrucks der Person, die durch die Kamera (10a, 10b, 10c, 10d) erlangt werden und dem gesprochenen Wort zugeordnet sind, um vorbestimmte Gesichtsausdruckdaten zu erzeugen;
wobei das Verfahren ferner Folgendes umfasst:
- bei weiterem Bestimmen, dass das gesprochene Wort durch die Person ausgesprochen wurde;
- (S8a) Erzeugen einer künstlichen Kameraansicht der Person aus einer virtuellen Kameraposition; und
- Erzeugen eines künstlichen Gesichtsausdrucks der Person, wenn die künstliche Kameraansicht der Person erzeugt wird, basierend auf den vorbestimmten Gesichtsausdrucksdaten, die dem gesprochenen Wort zugeordnet sind.

10. Verfahren nach Anspruch 9, ferner umfassend:
- (S2) Erzeugen eines dreidimensionalen Modells der Person durch Bilddaten, die durch die Kamera (10a, 10b, 10c, 10d) erlangt werden;
- (S4) Erlangen von zweidimensionalen Echtzeitbilddaten der Person durch die Kamera (10a, 10b, 10c, 10d); und
- (S8b) Erzeugen der künstlichen Kameraansicht der Person aus der virtuellen Kameraposition durch Projizieren der zweidimensionalen Echtzeitbilddaten auf das dreidimensionale Modell basierend auf der Blickrichtung der Person.

11. Verfahren nach einem der Ansprüche 9-10, ferner umfassend:
- (S3) Bestimmen einer Blickrichtung für das dreidimensionale Modell der Person; und
- (S5) Bestimmen einer Echtzeitblickrichtung der Person.

12. Verfahren nach einem der Ansprüche 9-11, ferner umfassend:
- (S6) Einstellen der virtuellen Kameraposition, sodass sie in der Blickrichtung der Person liegt; und
- (S7) Ausrichten der Blickrichtung des dreidimensionalen Modells der Person mit der Echtzeitblickrichtung der Person, wenn die zweidimensionalen Echtzeitbilddaten auf das dreidimensionale Modell projiziert werden.

13. Programmprodukt (500) für Verarbeitungsschaltungen, umfassend ein nicht transitorisches durch Verarbeitungsschaltungen lesbares Medium, das darauf ein Programm für Verarbeitungsschaltungen aufweist, das Programmanweisungen umfasst, wobei das Programm für Verarbeitungsschaltungen in eine Verarbeitungsschaltung (102a, 102b, 102c) ladbar und dazu konfiguriert ist, Ausführung des Verfahrens nach einem der Ansprüche 9 bis 12 zu veranlassen, wenn das Programm für Verarbeitungsschaltungen durch die mindestens eine Verarbeitungsschaltung (102a, 102b, 102c) betrieben wird.

## Revendications

1. Système de caméra (100) pour la génération d'une vue d'image de contact d'un œil d'une personne avec une direction de regard qui est décalée par rapport à une position de caméra, le système de caméra (100) comprenant :
une caméra (10a, 10b, 10c, 10d) configurée pour obtenir des données d'image de la personne ;
un microphone ;
un circuit de traitement (102a, 102b, 102c) configuré pour être connecté de manière opérationnelle à la caméra (10a, 10b, 10c, 10d) et configuré pour :
- obtenir une vue de caméra de la personne à partir d'une position de caméra ;
- déterminer un mot prononcé qui est prononcé par la personne ;
- stocker des données d'image d'une expression faciale de la personne obtenues par la caméra (10a, 10b, 10c, 10d) associées au mot prononcé pour générer des données d'expression faciale prédéterminées ; et
configuré en outre pour
- lors de la détermination que le mot prononcé a été prononcé par la personne ;
- générer une vue de caméra synthétique de la personne à partir d'une position de caméra virtuelle ; et
- générer une expression faciale synthétique de la personne lors de la génération de la vue de caméra synthétique de la personne sur la base des données d'expression faciale prédéterminées associées au mot prononcé.

2. Système de caméra (100) selon la revendication 1, dans lequel le circuit de traitement (102a, 102b, 102c) est en outre configuré pour :
- générer un modèle tridimensionnel de la personne par des données d'image obtenues par la caméra (10a, 10b, 10c, 10d) ;
- obtenir des données d'image bidimensionnelle en temps réel de la personne par la caméra (10a, 10b, 10c, 10d) ; et générer la vue de caméra synthétique de la personne à partir de la position de caméra virtuelle en projetant les données d'image bidimensionnelle en temps réel sur le modèle tridimensionnel sur la base de la direction de regard de la personne.

3. Système de caméra (100) selon l'une quelconque des revendications précédentes, dans lequel le circuit de traitement (102a, 102b, 102c) est en outre configuré pour :
- déterminer une direction de regard pour le modèle tridimensionnel de la personne ; et
- déterminer une direction de regard en temps réel de la personne.

4. Système de caméra (100) selon l'une quelconque des revendications précédentes, dans lequel le circuit de traitement (102a, 102b, 102c) est en outre configuré pour :
- régler la position de la caméra virtuelle pour qu'elle soit dans la direction de regard de la personne.

5. Système de caméra (100) selon l'une quelconque des revendications précédentes, dans lequel le circuit de traitement (102a, 102b, 102c) est en outre configuré pour :
- aligner la direction de regard du modèle tridimensionnel de la personne avec la direction de regard en temps réel de la personne lors de la projection des données d'image bidimensionnelle en temps réel sur le modèle tridimensionnel.

6. Système de caméra (100) selon l'une quelconque des revendications précédentes, dans lequel le circuit de traitement (102a, 102b, 102c) est en outre configuré pour obtenir en continu des données d'image par la caméra (10a, 10b, 10c, 10d) pour affiner le modèle tridimensionnel de la personne lorsque la personne déplace la tête dans différents angles de vue de la caméra (10a, 10b, 10c, 10d).

7. Système de caméra (100) selon l'une quelconque des revendications précédentes, dans lequel le système de caméra (100) comprend en outre au moins une première caméra (10a) et au moins une seconde caméra (10b) configurées pour capturer les données d'image bidimensionnelle en temps réel de la personne afin d'obtenir des images de la personne sous au moins deux angles différents.

8. Système de caméra (100) selon la revendication 7, dans lequel l'au moins une première caméra (10a) et l'au moins une seconde caméra (10b) sont configurées pour capturer des données d'image bidimensionnelle en temps réel d'au moins l'un quelconque des yeux et de la bouche de la personne.

9. Procédé de génération d'une vue d'image de contact d'un œil d'une personne avec une direction de regard qui est décalée par rapport à une position de caméra, le procédé comprenant :
- l'obtention (S1) d'une vue de caméra de la personne à partir d'une position de caméra ;
- la détermination d'un mot prononcé qui est prononcé par la personne ;
- le stockage de données d'image d'une expression faciale de la personne obtenues par la caméra (10a, 10b, 10c, 10d) associées au mot prononcé pour générer des données d'expression faciale prédéterminées ;
le procédé comprenant en outre
lors de la détermination supplémentaire que le mot prononcé a été prononcé par la personne ;
- la génération (S8a) d'une vue de caméra synthétique de la personne à partir d'une position de caméra virtuelle ; et
- la génération d'une expression faciale synthétique de la personne lors de la génération de la vue de caméra synthétique de la personne sur la base des données d'expression faciale prédéterminées associées au mot prononcé.

10. Procédé selon la revendication 9 comprenant en outre :
- la génération(S2) d'un modèle tridimensionnel de la personne par des données d'image obtenues par la caméra (10a, 10b, 10c, 10d) ;
- l'obtention (S4) de données d'image bidimensionnelle en temps réel de la personne par la caméra (10a, 10b, 10c, 10d) ; et
- la génération (S8b) de la vue de caméra synthétique de la personne à partir de la position de caméra virtuelle en projetant les données d'image bidimensionnelle en temps réel sur le modèle tridimensionnel en fonction de la direction de regard de la personne.

11. Procédé selon l'une quelconque des revendications 9 à 10 comprenant en outre :
- la détermination (S3) d'une direction de regard pour le modèle tridimensionnel de la personne ; et
- la détermination (S5) d'une direction de regard en temps réel de la personne.

12. Procédé selon l'une quelconque des revendications 9 à 11 comprenant en outre :
- le réglage (S6) de la position de caméra virtuelle pour qu'elle soit dans la direction de regard de la personne ; et
- l'alignement (S7) de la direction de regard du modèle tridimensionnel de la personne avec la direction de regard en temps réel de la personne lors de la projection des données d'image bidimensionnelle en temps réel sur le modèle tridimensionnel.

13. Produit de programme de circuit de traitement (500) comprenant un support lisible par circuit de traitement non transitoire, sur lequel se trouve un programme de circuit de traitement comprenant des instructions de programme, le programme de circuit de traitement pouvant être chargé dans un circuit de traitement (102a, 102b, 102c) et configuré pour provoquer l'exécution du procédé selon l'une quelconque des revendications 9 à 12 lorsque le programme de circuit de traitement est exécuté par l'au moins un circuit de traitement (102a, 102b, 102c).
